# FASCICULE DE BREVET EUROPEEN

(11) **EP 3 969 735 B1**
(45) Date de publication et mention de la délivrance du brevet: **23.04.2025**
(21) Numéro de dépôt: 20737511.4
(22) Date de dépôt: 13.05.2020
(51) Int. Cl.: F02B 19/10, F02B 19/12, F02B 19/18, F02D 37/02, F02M 51/02, F02B 19/02, F02B 19/06, F02M 57/06, F02P 15/00, F02P 13/00

(54) **MOTEUR AVEC UN INSERT D'ALLUMAGE A PRECHAMBRE ACTIVE**
MOTOR MIT EINEM ZÜNDEINSATZ MIT AKTIVER VORKAMMER
ENGINE WITH AN IGNITION INSERT WITH ACTIVE PRECHAMBER

(30) Priorité: 13.05.2019 FR 1904961
(43) Date de publication de la demande: 23.03.2022
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2020/050790
(87) Numéro de publication internationale: WO 2020/229775

(56) Documents cités:
- EP-A1- 1 887 215
- WO-A1-93/08385
- DE-A1- 10 016 558
- DE-A1- 102009 049 755
- DE-B1- 2 510 176
- FR-A1- 3 061 743
- US-A- 4 074 664
- US-A1- 2002 104 507
- US-A1- 2016 053 668
- US-A1- 2016 252 007
- US-A1- 2017 328 274

## Description

La présente invention a pour objet un insert d'allumage à préchambre active qui permet de loger dans un faible encombrement et de façon peu intrusive une préchambre active dans la culasse d'un moteur thermique à combustion interne.

Il existe de nombreux concepts de préchambres actives, ces dernières étant utilisées comme moyen d'allumage pour mettre à feu une charge principale contenue dans la chambre de combustion d'un moteur à combustion interne.

On désigne usuellement par préchambre « active » les préchambres dans lesquelles débouche, en plus d'une bougie d'allumage électrique connue en soi, au moins un injecteur de carburant associé ou non à un injecteur d'air, ou au moins un injecteur de mélange d'air et de carburant.

On connaît par exemple le concept de préchambre connu sous l'appellation de « Turbulent Jet Ignition », breveté et développé par la société « Mahle ». Ledit concept - qui a notamment fait l'objet du brevet EP 3 001 008 A1 publié le 30 mars 2016 - prévoit une préchambre dans laquelle débouche une bougie d'allumage électrique d'une part, et un injecteur de carburant d'autre part. Ladite préchambre se destine essentiellement à allumer des charges principales fortement diluées à l'air, c'est à dire pauvres en essence et riches en oxygène.

On connaît également la demande de brevet N°FR 3 061 743 publiée le 13 juillet 2018 et relative à une préchambre d'allumage à clapet, et celle N° FR 3 060 222 publiée le 15 juin 2018 relative à une bougie d'allumage à électrode-navette. Ces deux demandes appartiennent au demandeur et présentent la particularité de séparer la préchambre de la chambre principale au moyen d'un clapet ou d'une électrode-navette. Cette configuration innovante offre de nombreuses possibilités comparativement aux préchambres conventionnelles qui communiquent en permanence avec la chambre de combustion du moteur.

On note que les demandes de brevet N°FR 3 061 743 et N° FR 3 060 222 ont fait l'objet d'une demande de brevet de perfectionnement N°18 58111 en date du 10 septembre 2018. Cette dernière demande appartient au demandeur et a pour objet le rappel magnétique du clapet ou de l'électrode-navette.

On connait d'après l'enseignement décrit et illustré dans le brevet DE10016558 un procédé qui consiste à utiliser un dispositif d'allumage à chambre pilote amorcé à distance dans une chambre de combustion principale d'un moteur à combustion interne.

De manière générale, tous les dispositifs d'allumage à préchambre prévoient qu'une charge pilote principalement composée d'air et de carburant est d'abord introduite dans ladite préchambre. Puis, ladite charge pilote est mise à feu par une bougie d'allumage. En brûlant, la charge pilote voit sa pression augmentée au point qu'elle est éjectée à haute température et à grande vitesse sous la forme de torches de gaz brûlant dans l'espace tridimensionnel de la chambre de combustion du moteur. En traversant le volume de ladite chambre, lesdites torches mettent à feu la charge principale qu'elle contient.

Par rapport à une simple bougie d'allumage, la puissance d'allumage beaucoup plus élevée des torches combinée à la formation de turbulence locale de grande intensité et de courte vie permet de brûler rapidement des charges principales d'air et de carburant fortement diluées avec de l'air atmosphérique additionnel ou avec des gaz d'échappement re-circulés de préférence préalablement refroidis.

La combinaison d'un allumage puissant et de charges fortement diluées permet aux préchambres d'allumage par troche de significativement réduire la consommation de carburant des moteurs à combustion interne à allumage commandé, notamment en-en limitant les pertes par pompage et les pertes de chaleur aux parois. La charge principale étant fortement diluée et sa combustion étant rapide, ladite charge est également peu sensible au cliquetis ce qui permet de prévoir pour le moteur qui la reçoit un rapport volumétrique élevé et une avance à l'allumage optimale, ces deux particularités permettant de conférer un rendement élevé au cycle thermodynamique mis en œuvre.

L'une des difficultés d'implantation des préchambres d'allumage actives est la place occupée par la bougie d'allumage et l'injecteur que reçoivent lesdites préchambres, et qui débouchent dans le très petit volume desdites préchambres.

En outre, il est préférable d'éviter tout conduit de liaison entre la préchambre et le nez d'injecteur comme l'illustre la demande de brevet N°FR 3 061 743. Il est en effet difficile de propager la flamme préalablement initialisée dans la préchambre par la bougie d'allumage dans un tel conduit ce dernier étant froid, bloquant la flamme, formant un piège à imbrûlés, et refroidissant fortement la charge pilote du fait de la grande surface interne qu'il expose au regard de son volume.

Les préchambres actives posent ainsi un problème d'intégration dans les moteurs à combustion interne car en général, la bougie d'allumage et l'injecteur sont juxtaposés ou quasiment juxtaposés comme le montre par exemple le brevet EP 3 001 008 A1.

Il résulte d'un tel agencement un encombrement radial substantiel de l'ensemble composé de la préchambre, de la bougie et de l'injecteur. De plus, ledit agencement rend difficile la réalisation de préchambres de très petit volume sans que le rapport surface/volume interne desdites préchambres ne soit très grand et favorise à l'excès le refroidissement des gaz de la charge pilote une fois ces derniers portés à haute température.

On note d'ailleurs que l'encombrement important des différents constituants de la préchambre active réduit la place disponible pour loger les chambres d'eau qui refroidissent la culasse, les conduits d'admission et d'échappement du moteur à combustion interne, et les arbres à cames dudit moteur.

En outre, le refroidissement de la préchambre devient potentiellement difficile à assurer si elle n'est pas directement en contact avec l'eau de refroidissement qui circule dans les chambres d'eau de la culasse.

On note également qu'installer une préchambre active dans un moteur préexistant nécessite d'en modifier en profondeur la culasse, cette dernière ne pouvant recevoir ladite préchambre sans subir de substantielles modifications. Il est donc nécessaire de supporter de lourds investissements pour modifier ladite culasse et pour en assurer la production industrielle.

C'est pour résoudre ces différents problèmes et inconvénients inhérents à l'implantation des préchambres actives dans les moteurs thermiques à combustion interne alternatifs à allumage commandé ou par compression que, suivant l'invention et selon un mode particulier de réalisation, l'insert d'allumage à préchambre active permet :
- De loger une préchambre active dans le puits de bougie ou d'injecteur de pratiquement tout moteur à allumage commandé ou Diesel, c'est à dire en minimisant les modifications auxquelles doit être soumise la culasse ;
- De refroidir ladite préchambre en-en mettant la surface extérieure directement en contact avec l'eau de refroidissement qui circule dans les chambres d'eau de la culasse qui la reçoit ;
- De réaliser des préchambres actives de très petit volume et qui offrent un petit rapport surface/volume, de sorte que les échanges de chaleur entre les gaz contenus dans lesdites préchambres et la paroi interne desdites préchambres restent limités ;

Tenant compte de ce qui précède, l'insert d'allumage à préchambre active suivant l'invention permet de répondre à un besoin non-satisfait de pouvoir implanter efficacement et à moindre coût une préchambre active sur tout type de moteur à combustion interne alternatif.

L'insert d'allumage à préchambre active suivant l'invention est prévu peu cher à fabriquer en grande série, ceci pour rester compatible avec les contraintes économiques de la plupart des applications auxquelles il se destine, y-compris automobiles.

Il est entendu que l'insert d'allumage à préchambre active selon l'invention peut s'appliquer à tout moteur à combustion interne rotatif ou alternatif, quel qu'en soit le type, quel que soit le carburant gazeux, liquide ou solide qu'il consomme, et que sa charge principale soit diluée avec de l'EGR refroidi ou non, avec un gaz neutre de quelque nature que ce soit, ou avec un gaz riche en oxygène ou en tout autre comburant.

Il est aussi entendu que la charge pilote prévue pour mettre à feu la charge principale de tout moteur à allumage commandé qui reçoit l'insert d'allumage à préchambre active selon l'invention peut contenir un carburant et/ou un comburant différent du carburant et/ou comburant qui constitue ladite charge principale.

Le moteur à combustion interne comporte une culasse qui coiffe un cylindre pour former avec un piston une chambre de combustion dans laquelle peut être introduite une charge principale, ladite culasse hébergeant une préchambre d'allumage dans laquelle débouchent une bougie d'allumage et un nez d'injecteur d'au moins un injecteur et dans laquelle peut être introduite une charge pilote, ladite préchambre pouvant communiquer avec la chambre de combustion successivement via un conduit d'éjection des gaz et via au moins un orifice d'éjection des gaz qui débouche dans ladite chambre par l'intermédiaire d'un nez de préchambre, ledit moteur à combustion interne comprenant un insert d'allumage à préchambre active comportant :
- Au moins un puits d'insert aménagé dans la culasse et présentant des moyens de fixation, ledit puits débouchant d'une part, à l'extérieur de la culasse via un orifice d'introduction d'insert de gros diamètre, et d'autre part, dans la chambre de combustion via un orifice de nez de préchambre de plus petit diamètre, les deux dits diamètres étant reliés l'un à l'autre par au moins un épaulement d'appui d'insert ;
- Au moins un corps d'insert cylindrique constitué d'une ou plusieurs pièces et dans lequel sont notamment aménagés la préchambre d'allumage et le conduit d'éjection des gaz, ledit corps étant logé à faible jeu dans le puits d'insert, étant indexé en rotation par rapport à la culasse, et se terminant par le nez de préchambre qui traverse l'orifice de nez de préchambre, cependant que ledit corps présente une surface d'appui d'insert qui repose directement ou indirectement sur l'épaulement d'appui d'insert ;
- Au moins un puits de bougie d'insert aménagé dans le corps d'insert cylindrique, parallèlement à l'axe dudit corps ou en formant un angle fermé par rapport audit axe et au centre ou proche du centre dudit corps, ledit puits de bougie débouchant d'une part, au niveau de l'extrémité du corps d'insert cylindrique qui est axialement à l'opposé du nez de préchambre, et d'autre part, dans la préchambre d'allumage, ledit puits de bougie recevant la bougie d'allumage ou le nez d'injecteur ;
- Au moins un orifice radial d'injecteur aménagé radialement dans le corps d'insert cylindrique mais pas obligatoirement perpendiculairement à ce dernier et dans lequel est logée l'extrémité du nez d'injecteur ou la bougie d'allumage, ledit orifice reliant la préchambre d'allumage et/ou le conduit d'éjection des gaz avec la surface externe du corps d'insert cylindrique ;
- Au moins un puits latéral d'injecteur aménagé dans la culasse, ledit puits recevant le corps du nez d'injecteur ou la bougie d'allumage et reliant l'extérieur de la culasse avec le puits d'insert tandis que l'orifice radial d'injecteur est aligné avec ledit puits de sorte que l'extrémité du nez d'injecteur ou de la bougie d'allumage débouche dans la préchambre d'allumage et/ou le conduit d'éjection des gaz en traversant successivement le puits latéral d'injecteur et l'orifice radial d'injecteur ;
- Des moyens de serrage coopérant avec les moyens de fixation afin de maintenir directement ou indirectement la surface d'appui d'insert du corps d'insert cylindrique plaquée contre l'épaulement d'appui d'insert.
- ledit nez de préchambre hébergeant un clapet de stratification qui est plaqué soit contre l'extrémité du conduit d'éjection des gaz pour fermer ce dernier de manière étanche, soit, contre une portée de clapet côté chambre pour former avec le conduit d'éjection des gaz une préchambre d'allumage par torche qui communique simultanément d'une part, avec la préchambre d'allumage via le conduit d'éjection des gaz, et d'autre part, avec la chambre de combustion par l'intermédiaire de l'orifice d'éjection des gaz ;
- Au moins une source de champ magnétique (44) qui est positionnée sur le corps d'insert cylindrique (70), ladite source produisant un champ magnétique qui tend à maintenir le clapet de stratification (13) plaqué contre l'extrémité du conduit d'éjection des gaz (76), ce dernier étant constitué d'un matériau magnétique (43) et formant au niveau de son contact avec le clapet de stratification (13) un tube d'éjection des gaz (89) dont le diamètre extérieur est inférieur à celui dudit clapet (13), ledit tube (89) étant enserré dans un manchon amagnétique (85) constitué d'un matériau amagnétique (50).

Le moteur à combustion interne suivant la présente invention comprend un nez de préchambre qui est constitué d'un nez rapporté qui coiffe le conduit d'éjection des gaz, l'orifice d'éjection des gaz étant aménagé dans ledit nez rapporté.

Le moteur à combustion interne suivant la présente invention comprend un espace formant une chambre d'eau de refroidissement d'insert qui est laissé entre le corps d'insert cylindrique et le puits d'insert.

Le moteur à combustion interne suivant la présente invention comprend un puits latéral d'injecteur qui est constitué d'un alésage ajouré ou non-continu qui communique sur sa longueur avec au moins une chambre d'eau de refroidissement de culasse que comprend la culasse.

Le moteur à combustion interne suivant la présente invention comprend une virole de serrage d'insert qui prend appui sur la face de serrage par virole par l'intermédiaire d'un ressort de contention.

Le moteur à combustion interne suivant la présente invention comprend des moyens de serrage qui sont constitués d'au moins une virole de serrage d'insert présentant un filetage extérieur de virole coopérant avec les moyens de fixation du puits d'insert qui sont constitués d'un filetage intérieur de puits, ladite virole étant percée en son centre pour laisser passer la bougie d'allumage.

Le moteur à combustion interne suivant la présente invention comprend une surface d'appui d'insert qui forme directement ou indirectement une liaison rotule avec l'épaulement d'appui d'insert cependant que le corps d'insert cylindrique forme directement ou indirectement une liaison rotule avec les moyens de serrage.

Le moteur à combustion interne suivant la présente invention comprend des moyens de serrage qui prennent appui sur le corps d'insert cylindrique par l'intermédiaire d'une rondelle de glissement-rotulage qui peu se déplacer radialement soit par rapport au corps d'insert cylindrique, soit par rapport aux moyens de serrage.

Le moteur à combustion interne suivant la présente invention comprend une rondelle de glissement-rotulage qui est souple et qui forme un ressort de contention.

Le moteur à combustion interne suivant la présente invention comprend un nez d'injecteur qui est maintenu plaqué dans l'orifice radial d'injecteur et contre le corps d'insert cylindrique par des moyens de serrage élastique qui prennent appui d'une part, sur l'injecteur, et d'autre part, sur la culasse.

Le moteur à combustion interne suivant la présente invention comprend des moyens de serrage élastique qui sont constitués d'une bride qui prend appui sur l'injecteur d'une part, et qui est reliée à la culasse par au moins une vis de bride d'autre part.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

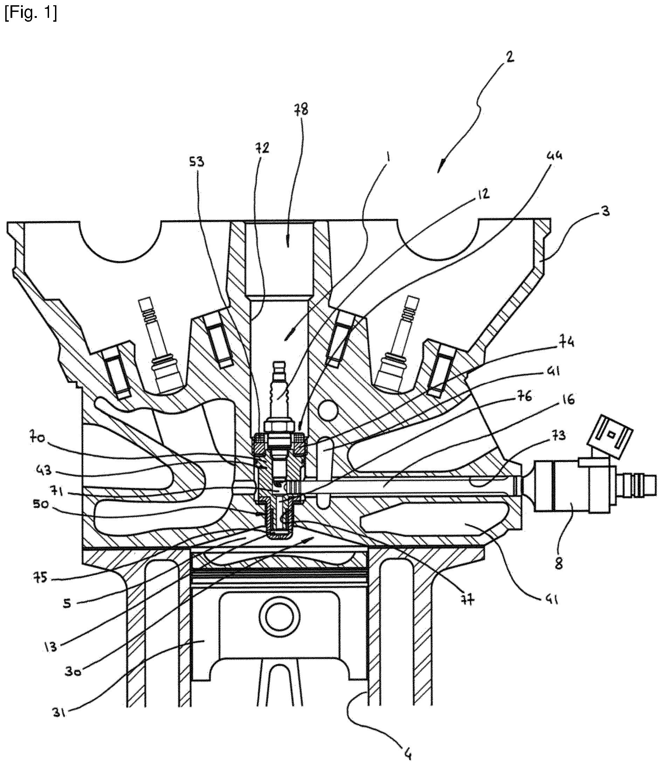

[Fig. 1] est une vue en coupe schématique de l'insert d'allumage à préchambre active suivant l'invention tel qu'il peut être installé dans la culasse d'un moteur à combustion interne, ledit insert recevant à titre de variante un clapet de stratification maintenu plaqué contre l'extrémité du conduit d'éjection des gaz par un champ magnétique produit par un aimant permanent.

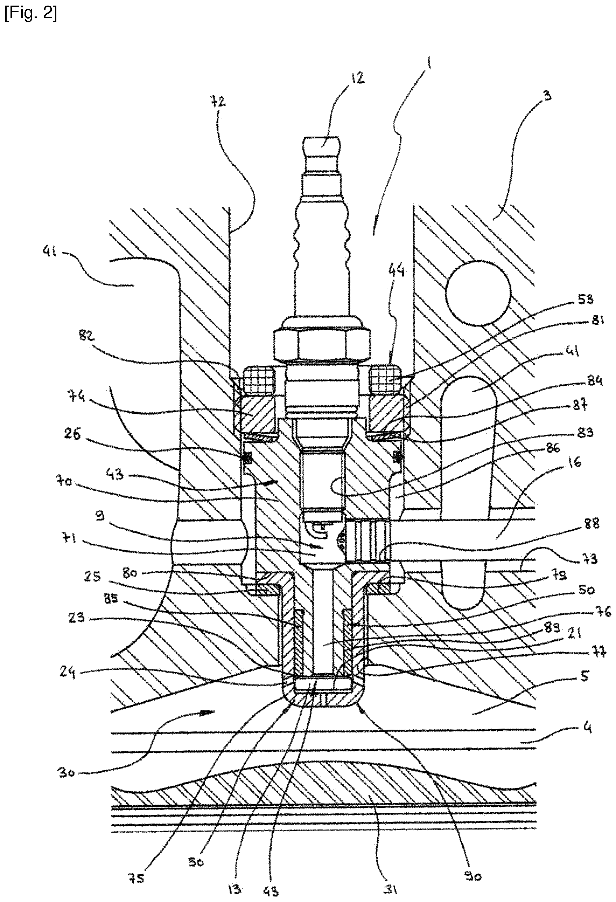

[Fig. 2] est une vue en coupe schématique cadrée sur le corps d'insert cylindrique de l'insert d'allumage à préchambre active suivant l'invention et selon la variante illustrée en figure 1.

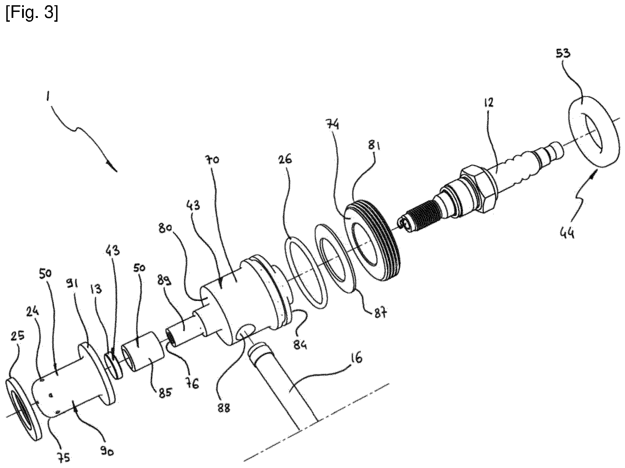

[Fig. 3] est une vue tridimensionnelle éclatée du corps d'insert cylindrique de l'insert d'allumage à préchambre suivant l'invention et des principaux composants avec lesquels coopère ledit corps, ceci selon la variante de réalisation illustrée en figure 1 qui prévoit un clapet de stratification et un aimant permanent.

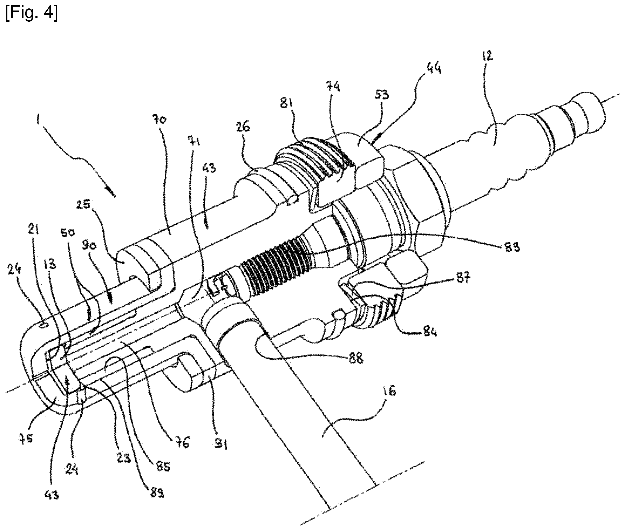

[Fig. 4] est une vue tridimensionnelle en écorché du corps d'insert cylindrique de l'insert d'allumage à préchambre suivant l'invention et des principaux composants avec lesquels coopère ledit corps, ceci selon la variante de réalisation illustrée en figure 1 qui prévoit un clapet de stratification et un aimant permanent.

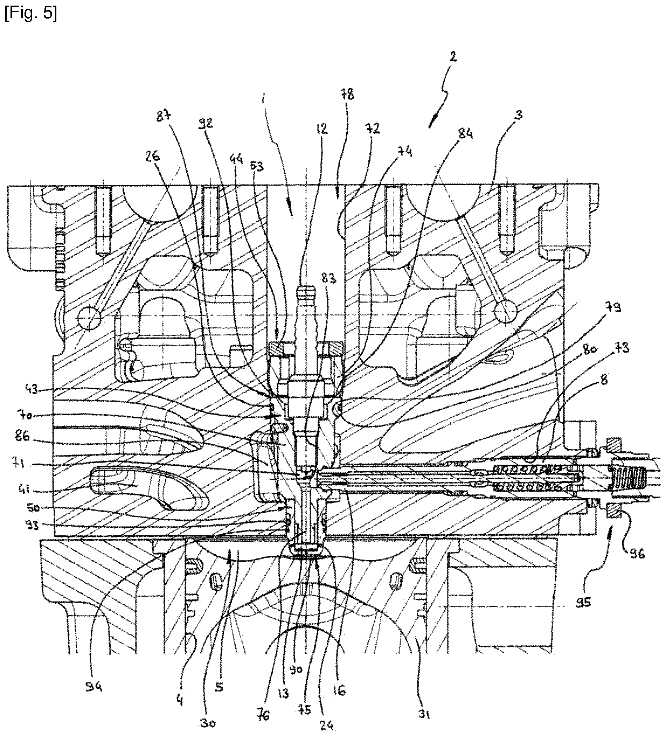

[Fig. 5] est une vue en coupe schématique du corps d'insert cylindrique de l'insert d'allumage à préchambre active suivant l'invention tel qu'il peut être installé dans la culasse d'un moteur à combustion interne, la surface d'appui d'insert formant une liaison rotule avec l'épaulement d'appui d'insert cependant que le corps d'insert cylindrique forme une liaison rotule avec les moyens de serrage par l'intermédiaire d'une rondelle de glissement-rotulage.

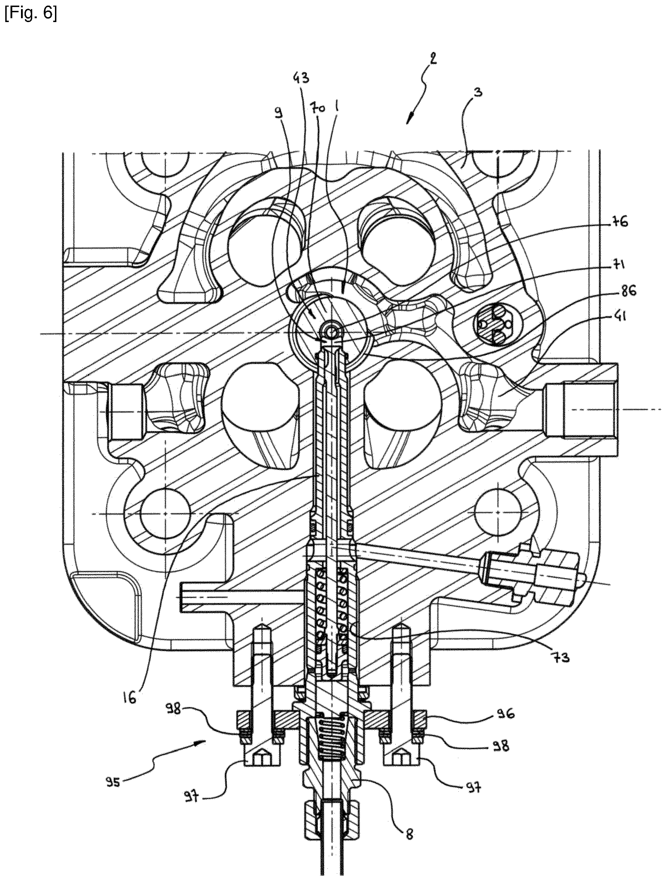

[Fig. 6] est une vue en coupe schématique par le dessus de la figure 5.

### DESCRIPTION DE L'INVENTION :

On a montré en figures 1 à 6 l'insert d'allumage à préchambre active 1 suivant l'invention, divers détails de ses composants, ses variantes, et ses accessoires.

L'insert d'allumage à préchambre active 1 est particulièrement prévu pour un moteur à combustion interne 2 ce dernier comportant une culasse 3 qui coiffe un cylindre 4 pour former avec un piston 31 une chambre de combustion 5 dans laquelle peut être introduite une charge principale 30.

Comme on le voit en figures 1, 2, 5 et 6, la culasse 3 héberge une préchambre d'allumage 71 dans laquelle débouchent une bougie d'allumage 12 et un nez d'injecteur 16 d'au moins un injecteur 8 et dans laquelle peut être introduite une charge pilote 9, ladite préchambre 71 pouvant communiquer avec la chambre de combustion 5 successivement via un conduit d'éjection des gaz 76 et via au moins un orifice d'éjection des gaz 24 qui débouche dans ladite chambre 5 par l'intermédiaire d'un nez de préchambre 75.

En figures 1, 2, 5 et 6, on a montré que l'insert d'allumage à préchambre active 1 suivant l'invention comprend au moins un puits d'insert 72 aménagé dans la culasse 3. Ledit puits d'insert 72 comprend des moyens de fixation qui sont constitués d'un filetage intérieur de puits 82 sur une partie de sa longueur. En outre, ledit puits 72 débouche d'une part, à l'extérieur de la culasse 3 via un orifice d'introduction d'insert 78 de gros diamètre, et d'autre part, dans la chambre de combustion 5 via un orifice de nez de préchambre 77 de plus petit diamètre, les deux dits diamètres étant reliés l'un à l'autre par au moins un épaulement d'appui d'insert 79 qui peut par exemple être plan ou conique.

En figures 1 à 6, on voit que l'insert d'allumage à préchambre active 1 suivant l'invention présente au moins un corps d'insert cylindrique 70 constitué d'une ou plusieurs pièces et dans lequel sont notamment aménagés la préchambre d'allumage 71 et le conduit d'éjection des gaz 76.

Le corps d'insert cylindrique 70 est logé à faible jeu dans le puits d'insert 72, est indexé en rotation par rapport à la culasse 3, et se termine par le nez de préchambre 75 qui traverse l'orifice de nez de préchambre 77. Le corps d'insert cylindrique 70 présente également une surface d'appui d'insert 80 qui repose directement ou indirectement sur l'épaulement d'appui d'insert 79.

On note que lorsque le corps d'insert cylindrique 70 est introduit dans le puits d'insert 72 par l'orifice d'introduction d'insert 78, ledit corps 70 est arrêté dans son déplacement lorsque l'épaulement d'appui d'insert 79 entre en contact avec la surface d'appui d'insert 80.

On note qu'un joint d'appui 25 peut être prévu entre la surface d'appui d'insert 80 et l'épaulement d'appui d'insert 79 qui réalise une étanchéité entre le puits d'insert 72 et la chambre de combustion 5. Ledit joint 25 peut être métallique comme du cuivre recuit ou être de tout autre type connu de l'homme de l'art.

Comme on le voit particulièrement en figures 2, 4 et 5, l'insert d'allumage à préchambre active 1 suivant l'invention présente au moins un puits de bougie d'insert 83 aménagé dans le corps d'insert cylindrique 70, parallèlement à l'axe dudit corps 70 ou en formant un angle fermé par rapport audit axe et au centre ou proche du centre dudit corps 70, ledit puits de bougie 83 débouchant d'une part, au niveau de l'extrémité du corps d'insert cylindrique 70 qui est axialement à l'opposé du nez de préchambre 75, et d'autre part, dans la préchambre d'allumage 71. Le puits de bougie d'insert 83 reçoit la bougie d'allumage 12 ou le nez d'injecteur 16.

On remarque, particulièrement en figures 2 à 4, que l'insert d'allumage à préchambre active 1 suivant l'invention comprend au moins un orifice radial d'injecteur 88 aménagé radialement dans le corps d'insert cylindrique 70 mais pas obligatoirement perpendiculairement à ce dernier et dans lequel est logée l'extrémité du nez d'injecteur 16 ou la bougie d'allumage 12.

Ledit orifice 88 relie la préchambre d'allumage 71 et/ou le conduit d'éjection des gaz 76 avec la surface externe du corps d'insert cylindrique 70 tandis qu'une étanchéité peut être prévue entre l'orifice radial d'injecteur 88 et le nez d'injecteur 16 qui prend la forme d'un segment, d'un joint ou de tout autre moyen connu de l'homme de l'art, et qui évite toute fuite de liquide ou de gaz entre la préchambre d'allumage 71 et/ou le conduit d'éjection des gaz 76 et la surface externe du corps d'insert cylindrique 70.

On notera d'ailleurs que l'orifice radial d'injecteur 88 et le nez d'injecteur 16 peuvent constituer une liaison rotule autorisant un faible débattement angulaire entre ledit orifice 88 et ledit nez 16.

En figures 1, 2, 5 et 6, on a montré que l'insert d'allumage à préchambre active 1 suivant l'invention comprend au moins un puits latéral d'injecteur 73 aménagé dans la culasse 3 en une ou plusieurs parties selon l'agencement de la matière constitutive de la culasse 3 traversée.

Ledit puits 73 reçoit le corps du nez d'injecteur 16 et selon le cas tout ou partie des autres constituants de l'injecteur 8, ou la bougie d'allumage 12. Ledit puits 73 relie l'extérieur de la culasse 3 - c'est à dire par exemple les conduits d'admission du moteur à combustion interne 2 - avec le puits d'insert 72.

On remarque que l'orifice radial d'injecteur 88 est aligné avec le puits latéral d'injecteur 73 de sorte que l'extrémité du nez d'injecteur 16 ou de la bougie d'allumage 12 débouche dans la préchambre d'allumage 71 et/ou le conduit d'éjection des gaz 76 en traversant successivement le puits latéral d'injecteur 73 et l'orifice radial d'injecteur 88.

On note que le corps d'insert cylindrique 70 est réputé correctement indexé en rotation par rapport à la culasse 3 lorsque le nez d'injecteur 16 est simultanément logé dans le puits latéral d'injecteur 73 et dans l'orifice radial d'injecteur 88.

On note aussi qu'une étanchéité peut avantageusement être prévue entre le puits latéral d'injecteur 73 et le nez d'injecteur 16 ladite étanchéité prenant la forme d'un segment, d'un joint ou de tout autre moyen connu de l'homme de l'art, et ladite étanchéité isolant tout ou partie de l'intérieur du puits latéral d'injecteur 73 de l'extérieur de la culasse 3.

On notera d'ailleurs que le puits latéral d'injecteur 73 d'une part, et le corps du nez d'injecteur 16 voire toute autre partie constituante de l'injecteur 8 d'autre part, peuvent constituer une liaison rotule autorisant un faible débattement angulaire entre ledit puits latéral 73 et ledit injecteur 8.

On remarque en figures 1, 5 et 6 que le puits latéral d'injecteur 73 peut être logé dans la fonderie de la culasse 3 au niveau des ports d'admission du moteur à combustion interne 2. Cette localisation est légèrement perturbante pour l'écoulement des gaz mais avantageuse en termes d'architecture.

En ce cas, l'entrée du puits latéral d'injecteur 73 peut être prévue assez profonde dans la culasse de sorte que seul le corps du nez d'injecteur 16 traverse les ports d'admission.

En figures 1 à 5, on a montré que l'insert d'allumage à préchambre active 1 suivant l'invention comprend des moyens de serrage qui sont constitués d'au moins une virole de serrage d'insert 74 qui présente un filetage extérieur de virole 81 qui coopère avec le filetage intérieur de puits 82.

La virole de serrage d'insert 74 prend directement ou indirectement appui sur une face de serrage par virole 84 que lui présente le corps d'insert cylindrique 70 afin de maintenir directement ou indirectement la surface d'appui d'insert 80 dudit corps 70 plaquée sur l'épaulement d'appui d'insert 79.

Comme le montrent les figures 1 à 5, la virole de serrage d'insert 74 est percée en son centre pour laisser passer la bougie d'allumage 12.

On notera que la virole de serrage d'insert 74 peut avantageusement offrir une prise de clé permettant de la faire tourner aux fins de la serrer, ladite prise de clé pouvant être constituée d'encoches, d'orifices, ou d'une forme femelle ou mâle de quelque géométrie que ce soit complémentaire avec une forme que présente une clé de serrage.

Comme le montrent les figures 1 à 5, le nez de préchambre 75 peut héberger un clapet de stratification 13 qui est plaqué soit contre l'extrémité du conduit d'éjection des gaz 76 pour fermer ce dernier de manière étanche, soit, contre une portée de clapet côté chambre 21 pour former avec le conduit d'éjection des gaz 76 une préchambre d'allumage par torche 23 qui communique simultanément d'une part, avec la préchambre d'allumage 71 via le conduit d'éjection des gaz 76, et d'autre part, avec la chambre de combustion 5 par l'intermédiaire de l'orifice d'éjection des gaz 24.

Comme l'expose la demande de brevet N° FR 3 061 743 publiée le 13 juillet 2018 appartenant au demandeur, on note que le clapet de stratification 13 se retrouve plaqué contre l'extrémité du conduit d'éjection des gaz 76 lorsque la pression régnant dans la chambre de combustion 5 est supérieure à la pression régnant dans la préchambre d'allumage 71.

Selon cette configuration particulière de l'insert d'allumage à préchambre active 1 suivant l'invention, une source de champ magnétique 44 peut être positionnée sur le corps d'insert cylindrique 70 pour produire un champ magnétique qui tend à maintenir le clapet de stratification 13 plaqué contre l'extrémité du conduit d'éjection des gaz 76 comme l'expose la demande de brevet N°18 58111 en date du 10 septembre 2018 appartenant au demandeur. En ce cas, le corps d'insert cylindrique 70 est avantageusement constitué en tout ou partie d'un matériau magnétique 43.

Comme le montrent les figure 1 à 5, la source de champ magnétique 44 peut prendre la forme d'un aimant permanent 53 qui peut n'être fixé par aucun moyen mécanique sur le corps d'insert cylindrique 70 et ne rester en position sur ce dernier que du seul fait de son collage magnétique.

A titre d'alternative, la source de champ magnétique 44 peut être constituée d'une bobine de fil conducteur qui produit un champ magnétique lorsque ledit fil est traversé par un courant électrique. Cette configuration particulière permet par exemple de ne pas rappeler le clapet de stratification 13 plaqué contre l'extrémité du conduit d'éjection des gaz 76 lors du démarrage à froid du moteur à combustion interne 2, ce qui permet d'alimenter la préchambre d'allumage 71 en mélange carburé non pas au moyen de l'injecteur 8, mais directement par les orifices d'éjection des gaz 24 via le conduit d'éjection des gaz 76, ledit mélange provenant de la chambre de combustion 5.

Comme l'illustrent les figures 1 à 5, le conduit d'éjection des gaz 76 peut être constitué d'un matériau magnétique 43 et former au niveau de son contact avec le clapet de stratification 13 un tube d'éjection des gaz 89 dont le diamètre extérieur est inférieur à celui dudit clapet 13, ledit tube 89 étant enserré dans un manchon amagnétique 85 constitué d'un matériau amagnétique 50.

Le manchon amagnétique 85 permet d'éviter que le clapet de stratification 13 ne se mette en travers dans son logement et ceci, en forçant le flux magnétique produit par la source de champ magnétique 44 à générer des lignes de champ qui sont non-parallèles au clapet de stratification 13 en périphérie de ce dernier.

On remarque que le manchon amagnétique 85 peut être principalement fait de cuivre qui possède une conductivité thermique élevée, et être monté serré par frettage autour du tube d'éjection des gaz 89 pour assurer une cohésion thermique maximale entre lui-même et ledit tube 89.

On note en outre que le clapet de stratification 13 peut être plat pour former avec l'extrémité du conduit d'éjection des gaz un contact étanche plan qui évite de localiser radialement ledit clapet 13 contrairement à un siège conique.

Ledit contact plan a aussi l'avantage de laisser une section maximale au passage des gaz à même levée de clapet 13 lorsque ce dernier est ouvert 76, c'est à dire lorsqu'il repose sur la portée de clapet côté chambre 21 avec laquelle il coopère.

De plus, le pourtour du clapet de stratification 13 peut avantageusement être troncosphérique et non pas cylindrique, ce qui permet de prévenir tout coincement dudit clapet dans son logement, quelle que soit son orientation par rapport au tube d'éjection des gaz 89 avec lequel il coopère.

Comme on le voit en figures 1 à 5, le clapet de stratification 13 peut être plan sur ses deux faces de sorte que sa fabrication est simplifiée.

Comme on l'a montré en figures 1 à 5, le nez de préchambre 75 peut être constitué d'un nez rapporté 90 qui coiffe le conduit d'éjection des gaz 76, l'orifice d'éjection des gaz 24 étant aménagé dans ledit nez rapporté 90.

On remarque que le nez rapporté 90 permet le cas échéant d'introduire un clapet de stratification 13 dans le nez de préchambre 75 comme le prévoit la demande la demande de brevet N° FR 3 061 743.

Dans le cas ou ledit clapet 13 est rappelé par une source de champ magnétique 44 comme le décrit la demande de brevet N°18 58111, il est possible de choisir pour le nez rapporté 90 un matériau amagnétique 50 comme le cuivre qui possède en outre une conductivité thermique élevée.

On note que le nez rapporté 90 peut être monté serré par frettage autour du tube d'éjection des gaz 89 pour assurer une cohésion thermique maximale entre lui-même et ledit tube 89, ou autour dudit tube 89 déjà enserré dans un manchon amagnétique 85 comme le montrent les figures 1, 2, 4 et 5.

On remarque également en figures 3 et 4 que le nez rapporté 90 peut présenter une collerette d'appui 91 qui est maintenue serrée entre la surface d'appui d'insert 80 et l'épaulement d'appui d'insert 79 lorsque le corps d'insert cylindrique 70 est correctement mis en place dans le puits d'insert 72.

Selon une variante de l'insert d'allumage à préchambre active 1 suivant l'invention particulièrement compréhensible en figures 1, 2, 5 et 6, un espace formant une chambre d'eau de refroidissement d'insert 86 peut être laissé entre le corps d'insert cylindrique 70 et le puits d'insert 72, de l'eau de refroidissement en provenance par exemple de la culasse 3 pouvant circuler dans ladite chambre d'eau 86.

On remarque en figures 1 à 5 qu'au moins un joint d'étanchéité de puits 26 peut être prévu placé entre le corps d'insert cylindrique 70 et le puits d'insert 72 qui interdit à l'eau de refroidissement de sortir à l'extérieur de la culasse 3 tandis qu'au moins un autre joint interdit à ladite eau de pénétrer dans la chambre de combustion 5.

On note également que le puits latéral d'injecteur 73 peut être constitué d'un alésage ajouré ou non-continu qui communique sur sa longueur avec au moins une chambre d'eau de refroidissement de culasse 41 que comprend la culasse 3. Cette configuration particulière permet de laisser le puits d'insert 72 communiquer avec ladite chambre d'eau 41.

En ce cas et comme le montrent les figures 1, 2, 5 et 6, le corps du nez d'injecteur 16 baigne pour partie de sa longueur dans l'eau de refroidissement que contient ladite chambre d'eau 41. Selon cette variante particulière de réalisation de l'insert d'allumage à préchambre active suivant l'invention, le diamètre du puits latéral d'injecteur 73 peut avantageusement être prévu significativement plus gros que celui du nez d'injecteur 16 qu'il héberge de sorte que l'eau de refroidissement puisse passer librement autour dudit nez 16 pour pénétrer dans le puits d'insert 72 ou pour sortir de ce dernier.

On note à ce titre qu'avantageusement, le puits latéral d'injecteur 73 peut traverser de part en part le puits d'insert 72 pour permettre à de l'eau de refroidissement de circuler entre ledit puits 72 et au moins deux chambres d'eau de refroidissement de culasse 41 que comprend la culasse 3.

A titre d'autre variante de l'insert d'allumage à préchambre active 1 suivant l'invention particulièrement visible en figures 2 à 5, la virole de serrage d'insert 74 peut prendre appui sur la face de serrage par virole 84 par l'intermédiaire d'un ressort de contention 87, ce dernier garantissant d'une part, un effort de maintient de la surface d'appui d'insert 80 sur l'épaulement d'appui d'insert 79 approximativement constant et d'autre part, une bonne étanchéité entre ladite surface 80 et ledit épaulement 79, en toutes circonstances.

On note qu'avantageusement, le ressort de contention 87 peut prendre la forme d'au moins une rondelle « Belleville » connue en soi, ou d'au moins une rondelle ressort ondulée.

On note également que le ressort de contention 87 peut permettre de remplacer le filetage intérieur de puits 82 et le filetage extérieur de virole 81 par une simple gorge aménagée dans le puits d'insert 72 et dans laquelle est logé un jonc d'arrêt, ledit jonc prenant appui d'une part dans ladite gorge et d'autre part, sur la virole de serrage d'insert 74.

On remarquera qu'un tel assemblage nécessite une presse pour comprimer le ressort de contention 87 pendant le montage du jonc d'arrêt.

En figure 5, on a montré que la surface d'appui d'insert 80 peut former directement ou indirectement une liaison rotule avec l'épaulement d'appui d'insert 79 cependant que le corps d'insert cylindrique 70 forme directement ou indirectement une liaison rotule avec les moyens de serrage 74.

Cette configuration particulière de l'insert d'allumage à préchambre active 1 suivant l'invention permet de laisser le corps d'insert cylindrique 70 librement s'orienter par rapport à la culasse 2.

Comme montré en figure 5, la surface d'appui d'insert 80 peut par exemple être troncosphérique en relief cependant que l'épaulement d'appui d'insert 79 peut être conique en creux.

La figure 5 illustre également que les moyens de serrage 74 peuvent prendre appui sur le corps d'insert cylindrique 70 par l'intermédiaire d'une rondelle de glissement-rotulage 92 qui peu se déplacer radialement soit par rapport au corps d'insert cylindrique 70, soit par rapport aux moyens de serrage 74.

Selon un mode particulier de réalisation de l'insert d'allumage à préchambre active 1 suivant l'invention également montré en figure 5, la rondelle de glissement-rotulage 92 peut exposer d'une part, au corps d'insert cylindrique 70 une face de contact plane, et d'autre part, aux moyens de serrage 74 un logement conique en creux qui coopère avec une forme troncosphérique en relief que présentent lesdits moyens 74, ledit logement conique et ladite forme troncosphérique formant une liaison rotule.

Comme montré en figure 5 et à titre de variante de réalisation de l'insert d'allumage à préchambre active 1 suivant l'invention, la rondelle de glissement-rotulage 92 peut être souple et former un ressort de contention 87 qui évite le desserrage des moyens de serrage 74 et garantit l'effort de placage de la surface d'appui d'insert 80 sur l'épaulement d'appui d'insert 79 quels que soient les écarts de dilatation thermique entre le corps d'insert cylindrique 70 et le puits d'insert 72 qui l'héberge.

On remarque que c'est la compression axiale, la torsion et l'expansion radiale de la rondelle de glissement-rotulage 92 qui confère à cette dernière les attributs d'un ressort de contention 87.

On remarquera également en figure 5 que le nez de préchambre 75 peut comporter un joint d'étanchéité de nez de préchambre 93 réalisé par exemple en matériau élastomère, ledit joint 93 réalisant une étanchéité entre la chambre de combustion 5 et la chambre d'eau de refroidissement d'insert 86, ledit joint 93 pouvant être protégé des flammes et des gaz chauds présents dans la chambre de combustion 5 par un segment de feu de nez de préchambre 94.

En figures 5 et 6, on a également montré que le nez d'injecteur 16 peut être maintenu plaqué dans l'orifice radial d'injecteur 88 et contre le corps d'insert cylindrique 70 par des moyens de serrage élastique 95 qui prennent appui d'une part, sur l'injecteur 8, et d'autre part, sur la culasse 3.

Selon cette configuration particulière, l'extrémité du nez d'injecteur 16 peut avantageusement être troncosphérique et reposer dans une portée conique réalisée dans le corps d'insert cylindrique 70, au niveau de l'orifice radial d'injecteur 88.

A titre de mode particulier de réalisation de l'insert d'allumage à préchambre active 1 suivant l'invention illustré en figure 6, les moyens de serrage élastique 95 peuvent être constitués d'une bride 96 qui prend appui sur l'injecteur 8 d'une part, et qui est reliée à la culasse 3 par au moins une vis de bride 97 d'autre part.

Sur ladite figure 6, on remarque que des ressorts de bride 98 peuvent avantageusement être intercalés entre la bride 96 et la tête des vis de bride 97, lesdits ressorts 98 pouvant être des rondelles « Belleville » connues en soi, être des ressorts hélicoïdaux, ou être de tout type connu de l'homme de l'art.

### FONCTIONNEMENT DE L'INVENTION :

Le fonctionnement de l'insert d'allumage à préchambre active 1 selon l'invention se comprend aisément à la vue des figures 1 à 6, lesquelles exposent un exemple de réalisation non-limitatif de l'invention, d'autres variantes étant possibles

Comme on le voit en figure 1, 2 et 5, le corps d'insert cylindrique 70 de l'insert d'allumage à préchambre active 1 se monte dans le puits d'insert 72, ce dernier ayant été prévu en lieu et place du puits de bougie de la culasse d'un moteur à allumage commandé conventionnel.

On a ici réalisé un puits d'insert 72 dont le diamètre au niveau du corps d'insert cylindrique 70 est de vingt-quatre millimètres. On remarquera que ce montage peut également être prévu en lieu et place du puits d'injecteur d'un moteur Diesel conventionnel.

Selon l'exemple non-limitatif exposé en figures 1 à 5, la bougie d'allumage est volontairement compacte. Il peut par exemple s'agir d'une bougie de type « Iridium Performance IY24 » de la société « Denso » qui présente un filetage de huit millimètres de diamètre et une prise de clé six pans de treize millimètres.

On remarque en figures 1 à 5 qu'à titre de variante, l'insert d'allumage à préchambre active 1 selon l'invention reçoit un clapet de stratification 13 maintenu plaqué au repos contre l'extrémité du conduit d'éjection des gaz 76 par un champ magnétique produit par une source de champ magnétique 44.

Pour en arriver à l'assemblage montré en figures 1, 2, 4 et 5, le corps d'insert cylindrique 70 a reçu un manchon amagnétique 85 qui a été fretté par différence de température sur le tube d'éjection des gaz 89, puis, l'ensemble a été coiffé d'un nez rapporté 90 également monté par frettage, le clapet de stratification 13 ayant été préalablement introduit dans ledit nez 90.

Ceci fait, le corps d'insert cylindrique 70 a été introduit dans le puits d'insert 72 que montrent les figures 1, 2 et 5 jusqu'à ce que sa surface d'appui d'insert 80 entre en contact avec l'épaulement d'appui d'insert 79 par l'intermédiaire du joint d'appui 25 et, selon cet exemple de réalisation non-limitatif, par l'intermédiaire d'une collerette d'appui 91 que présente le nez rapporté 90. Puis, ledit corps 70 a été tourné suivant son axe longitudinal jusqu'à ce que l'orifice radial d'injecteur 88 qu'il présente se retrouve aligné avec le puits latéral d'injecteur 73 aménagé dans la culasse 3.

Ensuite, le nez d'injecteur 16 a été introduit dans le puits latéral d'injecteur 73 jusqu'à ce que ledit nez 16 débouche dans la préchambre d'allumage 71 à la profondeur recherchée.

On remarque que selon l'exemple de réalisation de l'insert d'allumage à préchambre active 1 selon l'invention montré figures 1 à 6, le puits latéral d'injecteur 73 est orienté perpendiculairement à l'axe du corps d'insert cylindrique 70. Cette orientation n'est ici donnée qu'à titre d'exemple. En effet, le puits latéral d'injecteur 73 et l'orifice radial d'injecteur 88 avec lequel il coopère peuvent être librement orientés par rapport à l'axe du corps d'insert cylindrique 70 afin que ledit puits 73 n'interfère pas ou bien le moins possible avec les constituants essentiels de la culasse 3, et ne perturbe pas ou bien le moins possible le fonctionnement desdits constituants.

Une fois ces éléments mis en place, le ressort de contention 87 a été placé dans le puits d'insert 72 suivi de la virole de serrage d'insert 74, cette dernière ayant été vissée à un couple prédéterminé pour assurer la pression de contact recherchée entre la surface d'appui d'insert 80 et l'épaulement d'appui d'insert 79, via le joint d'appui 25 et la collerette d'appui 91.

On remarque sur les figures 1, 2, 5 et 6 la chambre d'eau de refroidissement d'insert 86 que forme l'espace laissé entre le corps d'insert cylindrique 70 et le puits d'insert 72. Ladite chambre 86 permet - selon un mode particulier de réalisation de l'insert d'allumage à préchambre active 1 selon l'invention - de refroidir le corps d'insert cylindrique 70.

Car en effet, la combustion de la charge pilote 9 dans la préchambre d'allumage dégage de la chaleur qui réchauffe le corps d'insert cylindrique 70. En l'absence d'un refroidissement suffisant, la température dudit corps 70 pourrait devenir excessive tandis que grâce à la chambre d'eau de refroidissement d'insert 86, ladite température est maintenue à une valeur acceptable.

D'ailleurs, la chambre d'eau de refroidissement d'insert 86 refroidit également le conduit d'éjection des gaz 76, le tube d'éjection des gaz 89, le manchon amagnétique 85, et le nez rapporté 90. A cet effet, le manchon amagnétique 85 et le nez rapporté 90 peuvent avantageusement être réalisés en cuivre allié, ce matériau offrant une haute conductivité thermique. Ainsi et grâce à ladite haute conductivité, la chaleur est efficacement exportée depuis le nez de préchambre 75 dans lequel sont aménagés les orifices d'éjection des gaz 24 jusqu'à la chambre d'eau de refroidissement d'insert 86.

## Revendications

1. Moteur à combustion interne (2) comportant une culasse (3) qui coiffe un cylindre (4) pour former avec un piston (31) une chambre de combustion (5) dans laquelle peut être introduite une charge principale (30), ladite culasse (3) hébergeant une préchambre d'allumage (71) dans laquelle débouchent une bougie d'allumage (12) et un nez d'injecteur (16) d'au moins un injecteur (8) et dans laquelle peut être introduite une charge pilote (9), ladite préchambre (71) pouvant communiquer avec la chambre de combustion (5) successivement via un conduit d'éjection des gaz (76) et via au moins un orifice d'éjection des gaz (24) qui débouche dans ladite chambre (5) par l'intermédiaire d'un nez de préchambre (75), comprenant un insert d'allumage à préchambre active (1) comportant :
• Au moins un puits d'insert (72) aménagé dans la culasse (3) et présentant des moyens de fixation (82), ledit puits (72) débouchant d'une part, à l'extérieur de la culasse (3) via un orifice d'introduction d'insert (78) de gros diamètre, et d'autre part, dans la chambre de combustion (5) via un orifice de nez de préchambre (77) de plus petit diamètre, les deux dits diamètres étant reliés l'un à l'autre par au moins un épaulement d'appui d'insert (79) ;
• Au moins un corps d'insert cylindrique (70) constitué d'une ou plusieurs pièces et dans lequel sont notamment aménagés la préchambre d'allumage (71) et le conduit d'éjection des gaz (76), ledit corps (70) étant logé à faible jeu dans le puits d'insert (72), étant indexé en rotation par rapport à la culasse (3), et se terminant par le nez de préchambre (75) qui traverse l'orifice de nez de préchambre (77), cependant que ledit corps (70) présente une surface d'appui d'insert (80) qui repose directement ou indirectement sur l'épaulement d'appui d'insert (79) ;
• Au moins un puits de bougie d'insert (83) aménagé dans le corps d'insert cylindrique (70), parallèlement à l'axe dudit corps (70) ou en formant un angle fermé par rapport audit axe et au centre ou proche du centre dudit corps 70, ledit puits de bougie (83) débouchant d'une part, au niveau de l'extrémité du corps d'insert cylindrique (70) qui est axialement à l'opposé du nez de préchambre (75), et d'autre part, dans la préchambre d'allumage (71), ledit puits de bougie (83) recevant la bougie d'allumage (12) ou le nez d'injecteur 16 ;
• Au moins un orifice radial d'injecteur (88) aménagé radialement dans le corps d'insert cylindrique (70) mais pas obligatoirement perpendiculairement à ce dernier et dans lequel est logée l'extrémité du nez d'injecteur (16) ou la bougie d'allumage 12, ledit orifice (88) reliant la préchambre d'allumage (71) et/ou le conduit d'éjection des gaz (76) avec la surface externe du corps d'insert cylindrique (70) ;
• Au moins un puits latéral d'injecteur (73) aménagé dans la culasse (3), ledit puits (73) recevant le corps du nez d'injecteur (16) ou la bougie d'allumage 12 et reliant l'extérieur de la culasse (3) avec le puits d'insert (72) tandis que l'orifice radial d'injecteur (88) est aligné avec ledit puits (73) de sorte que l'extrémité du nez d'injecteur (16) ou de la bougie d'allumage 12 débouche dans la préchambre d'allumage (71) et/ou le conduit d'éjection des gaz (76) en traversant successivement le puits latéral d'injecteur (73) et l'orifice radial d'injecteur (88) ;
• Des moyens de serrage (74) coopérant avec les moyens de fixation (82) afin de maintenir directement ou indirectement la surface d'appui d'insert (80) du corps d'insert cylindrique (70) plaquée contre l'épaulement d'appui d'insert (79) ;
• **caractérisé en ce que** le nez de préchambre (75) héberge un clapet de stratification (13) qui est plaqué soit contre l'extrémité du conduit d'éjection des gaz (76) pour fermer ce dernier de manière étanche, soit, contre une portée de clapet côté chambre (21) pour former avec le conduit d'éjection des gaz (76) une préchambre d'allumage par torche (23) qui communique simultanément d'une part, avec la préchambre d'allumage (71) via le conduit d'éjection des gaz (76), et d'autre part, avec la chambre de combustion (5) par l'intermédiaire de l'orifice d'éjection des gaz (24) ;
• et **en ce qu'**il comprend en outre au moins une source de champ magnétique (44) qui est positionnée sur le corps d'insert cylindrique (70), ladite source produisant un champ magnétique qui tend à maintenir le clapet de stratification (13) plaqué contre l'extrémité du conduit d'éjection des gaz (76), ce dernier étant constitué d'un matériau magnétique (43) et formant au niveau de son contact avec le clapet de stratification (13) un tube d'éjection des gaz (89) dont le diamètre extérieur est inférieur à celui dudit clapet (13), ledit tube (89) étant enserré dans un manchon amagnétique (85) constitué d'un matériau amagnétique (50).

2. Moteur à combustion interne (2) suivant la revendication 1, **caractérisé en ce que** le nez de préchambre (75) est constitué d'un nez rapporté (90) qui coiffe le conduit d'éjection des gaz (76), l'orifice d'éjection des gaz (24) étant aménagé dans ledit nez rapporté (90).

3. Moteur à combustion interne (2) suivant la revendication 1, **caractérisé en ce qu'**un espace formant une chambre d'eau de refroidissement d'insert (86) est laissé entre le corps d'insert cylindrique (70) et le puits d'insert (72).

4. Moteur à combustion interne (2) suivant la revendication 1, **caractérisé en ce que** le puits latéral d'injecteur (73) est constitué d'un alésage ajouré ou non-continu qui communique sur sa longueur avec au moins une chambre d'eau de refroidissement de culasse (41) que comprend la culasse (3).

5. Moteur à combustion interne (2) suivant la revendication 1, **caractérisé en ce que** les moyens de serrage sont constitués d'au moins une virole de serrage d'insert (74) qui présente un filetage extérieur de virole (81) coopérant avec les moyens de fixation du puits d'insert (72) qui sont constitués d'un filetage intérieur de puits (82), ladite virole (74) étant percée en son centre pour laisser passer la bougie d'allumage (12).

6. Moteur à combustion interne (2) suivant la revendication 5, **caractérisé en ce que** la virole de serrage d'insert (74) prend appui sur une face de serrage par virole (84) par l'intermédiaire d'un ressort de contention (87).

7. Moteur à combustion interne (2) suivant la revendication 1, **caractérisé en ce que** la surface d'appui d'insert (80) forme directement ou indirectement une liaison rotule avec l'épaulement d'appui d'insert (79) cependant que le corps d'insert cylindrique (70) forme directement ou indirectement une liaison rotule avec les moyens de serrage (74).

8. Moteur à combustion interne (2) suivant la revendication 7, **caractérisé en ce que** les moyens de serrage (74) prennent appui sur le corps d'insert cylindrique (70) par l'intermédiaire d'une rondelle de glissement-rotulage (92) qui peu se déplacer radialement soit par rapport au corps d'insert cylindrique (70), soit par rapport aux moyens de serrage (74).

9. Moteur à combustion interne (2) suivant la revendication 8, **caractérisé en ce que** la rondelle de glissement-rotulage (92) est souple et forme un ressort de contention (87).

10. Moteur à combustion interne (2) suivant la revendication 1, **caractérisé en ce que** le nez d'injecteur (16) est maintenu plaqué dans l'orifice radial d'injecteur (88) et contre le corps d'insert cylindrique (70) par des moyens de serrage élastique (95) qui prennent appui d'une part, sur l'injecteur (8), et d'autre part, sur la culasse (3).

11. Moteur à combustion interne (2) suivant la revendication 10, **caractérisé en ce que** les moyens de serrage élastique (95) sont constitués d'une bride (96) qui prend appui sur l'injecteur (8) d'une part, et qui est reliée à la culasse (3) par au moins une vis de bride (97) d'autre part.

## Patentansprüche

1. Verbrennungsmotor (2) mit einem Zylinderkopf (3), der einen Zylinder (4) so überdeckt, dass er mit einem Kolben (31) einen Brennraum (5) bildet, in den eine Hauptladung (30) eingebracht werden kann, wobei der Zylinderkopf (3) eine Zündvorkammer (71) einschließt, in die eine Zündkerze (12) und eine Einspritznase (16) mindestens eines Einspritzventils (8) münden und in die eine Zündladung (9) eingebracht werden kann, wobei die Vorkammer (71) nacheinander über einen Gasausstoßkanal (76) und über mindestens eine Gasausstoßöffnung (24), die über eine Vorkammernase (75) in den Brennraum (5) mündet, mit dem Brennraum (5) in Verbindung steht, umfassend einen Zündeinsatz mit aktiver Vorkammer (1), der umfasst:
• Mindestens einen Einsatzschacht (72), der im Zylinderkopf (3) ausgebildet ist und Befestigungsmittel (82) aufweist, wobei der Schacht (72) einerseits über eine Einsatzeinführöffnung (78) mit großem Durchmesser nach außerhalb des Zylinderkopfs (3) führt und andererseits über eine Vorkammernasenöffnung (77) mit kleinerem Durchmesser in den Brennraum (5) mündet, wobei die beiden Durchmesser durch mindestens eine Einsatzauflageschulter (79) miteinander verbunden sind;
• Mindestens einen zylindrischen Einsatzkörper (70), der aus einem oder mehreren Teilen besteht und in dem unter anderem die Zündvorkammer (71) und der Gasausstoßkanal (76) ausgebildet sind, wobei der Körper (70) mit geringem Spiel im Einsatzschacht (72) untergebracht ist, in Bezug auf den Zylinderkopf (3) in Drehung indexiert ist, und mit der Vorkammernase (75) endet, die die Vorkammernasenöffnung (77) durchquert, während der Körper (70) eine Einsatzauflagefläche (80) aufweist, die direkt oder indirekt auf der Einsatzauflageschulter (79) aufliegt;
• Mindestens einen Einsatzzündkerzenschacht (83), der in dem zylindrischen Einsatzkörper (70) parallel zur Achse des Körpers (70) oder in einem spitzen Winkel zu dieser Achse und in der Mitte oder nahe der Mitte des Körpers (70) angeordnet ist, wobei der Zündkerzenschacht (83) einerseits an das Ende des zylindrischen Einsatzkörpers (70)führt, das der Vorkammernase (75) axial gegenüberliegt, und andererseits in die Zündvorkammer (71) mündet, wobei der Zündkerzenschacht (83) die Zündkerze (12) oder die Einspritznase (16) aufnimmt;
• Mindestens eine radial im zylindrischen Einsatzkörper (70) angeordnete, aber nicht zwangsläufig senkrecht zu diesem verlaufende radiale Einspritzöffnung (88), in der das Ende der Einspritznase (16) oder der Zündkerze (12) untergebracht ist, wobei die Öffnung (88) die Zündvorkammer (71) und/oder den Gasausstoßkanal (76) mit der Außenfläche des zylindrischen Einsatzkörpers (70) verbindet;
• Mindestens einen seitlichen Einspritzschacht (73), der im Zylinderkopf (3) ausgebildet ist, wobei der Schacht (73) den Körper der Einspritznase (16) oder die Zündkerze (12) aufnimmt und die Außenseite des Zylinderkopfs (3) mit dem Einsatzschacht (72) verbindet, während die radiale Einspritzöffnung (88) so auf den Schacht (73) ausgerichtet ist, dass das Ende der Einspritznase (16) oder der Zündkerze (12) in die Zündvorkammer (71) und/oder den Gasausstoßkanal (76) mündet, indem es nacheinander den seitlichen Einspritzschacht (73) und die radiale Einspritzöffnung (88) durchquert;
• Spannmittel (74), die mit den Befestigungsmitteln (82) zusammenwirken, um die Einsatzauflagefläche (80) des zylindrischen Einsatzkörpers (70) direkt oder indirekt an der Einsatzauflageschulter (79) anliegend zu halten;
• **dadurch gekennzeichnet, dass** die Vorkammernase (75) ein Schichtungsventil (13) einschließt, das entweder gegen das Ende des Gasausstoßkanals (76) gedrückt wird, um diesen dicht zu verschließen, oder gegen eine kammerseitige Ventilfläche (21), um mit dem Gasausstoßkanal (76) eine Zündbrenner-Vorkammer (23) zu bilden, die gleichzeitig einerseits mit der Zündvorkammer (71) über den Gasausstoßkanal (76) und andererseits mit dem Brennraum (5) über die Gasausstoßöffnung (24) in Verbindung steht;
• und dass er außerdem mindestens eine Magnetfeldquelle (44) umfasst, die auf dem zylindrischen Einsatzkörper (70) positioniert ist, wobei die Quelle ein Magnetfeld erzeugt, das darauf abzielt, das Schichtungsventil (13) gegen das Ende des Gasausstoßkanals (76) gedrückt zu halten, wobei letzteres aus einem magnetischen Material (43) besteht und im Bereich seines Kontakts mit dem Schichtungsventil (13) ein Gasausstoßrohr (89) bildet, dessen Außendurchmesser kleiner ist als der des Ventils (13), wobei das Rohr (89) in einer nichtmagnetischen Hülse (85) aus einem nichtmagnetischen Material (50) eingeschlossen ist.

2. Verbrennungsmotor (2) nach Anspruch 1, **dadurch gekennzeichnet, dass** die Vorkammernase (75) aus einer aufgesetzten Nase (90) besteht, die den Gasausstoßkanal (76) überdeckt, wobei die Gasausstoßöffnung (24) in der aufgesetzten Nase (90) ausgebildet ist.

3. Verbrennungsmotor (2) nach Anspruch 1, **dadurch gekennzeichnet, dass** zwischen dem zylindrischen Einsatzkörper (70) und dem Einsatzschacht (72) Platz für eine Einsatzkühlwasserkammer (86) gelassen wird.

4. Verbrennungsmotor (2) nach Anspruch 1, **dadurch gekennzeichnet, dass** der seitliche Einspritzschacht (73) aus einer durchbrochenen oder nicht durchgehenden Bohrung besteht, die über ihre Länge mit mindestens einer Zylinderkopf-Kühlwasserkammer (41) in Verbindung steht, die der Zylinderkopf (3) umfasst.

5. Verbrennungsmotor (2) nach Anspruch 1, **dadurch gekennzeichnet, dass** die Spannmittel aus mindestens einem Einsatzspannring (74) bestehen, der ein mit den Befestigungsmitteln des Einsatzschachts (72) zusammenwirkendes Außengewinde (81) aufweist, wobei die Befestigungsmittel des Einsatzschachts aus einem Innengewinde (82) bestehen, wobei der Ring (74) in seiner Mitte zum Durchführen der Zündkerze (12) durchbohrt ist.

6. Verbrennungsmotor (2) nach Anspruch 5, **dadurch gekennzeichnet, dass** der Einsatzspannring (74) über eine Haltefeder (87) auf einer Spannring-Spannfläche (84) aufliegt.

7. Verbrennungsmotor (2) nach Anspruch 1, **dadurch gekennzeichnet, dass** die Einsatzauflagefläche (80) direkt oder indirekt eine Kugelgelenkverbindung mit der Einsatzauflageschulter (79) bildet, während der zylindrische Einsatzkörper (70) direkt oder indirekt eine Kugelgelenkverbindung mit den Spannmitteln (74) bildet.

8. Verbrennungsmotor (2) nach Anspruch 7, **dadurch gekennzeichnet, dass** die Spannmittel (74) über eine Gleit-Gelenk-Scheibe (92) auf dem zylindrischen Einsatzkörper (70) aufliegen, die sich entweder in Bezug auf den zylindrischen Einsatzkörper (70) oder in Bezug auf die Spannmittel (74) radial bewegen kann.

9. Verbrennungsmotor (2) nach Anspruch 8, **dadurch gekennzeichnet, dass** die Gleit-Gelenk-Scheibe (92) elastisch ist und eine Haltefeder (87) bildet.

10. Verbrennungsmotor (2) nach Anspruch 1, **dadurch gekennzeichnet, dass** die Einspritznase (16) in der radialen Einspritzöffnung (88) und gegen den zylindrischen Einsatzkörper (70) durch elastische Spannmittel (95) gedrückt gehalten wird, die einerseits am Einspritzventil (8) und andererseits am Zylinderkopf (3) anliegen.

11. Verbrennungsmotor (2) nach Anspruch 10, **dadurch gekennzeichnet, dass** die elastischen Spannmittel (95) aus einem Flansch (96) bestehen, der einerseits an dem Einspritzventil (8) anliegt und andererseits über mindestens eine Flanschschraube (97) mit dem Zylinderkopf (3) verbunden ist.

## Claims

1. An internal combustion engine (2) comprising a cylinder head (3) which caps a cylinder (4) to form with a piston (31) a combustion chamber (5) into which a main charge (30) can be introduced, said cylinder head (3) housing an ignition prechamber (71) into which open out a spark plug (12) and an injector tip (16) of at least one injector (8) and into which a pilot charge (9) can be introduced, said prechamber (71) being able to communicate with the combustion chamber (5) successively via a gas ejection duct (76) and via at least one gas ejection orifice (24) which opens out into said chamber (5) by means of a prechamber tip (75), comprising an ignition insert (1) with active prechamber, comprising:
• at least one insert well (72) provided in the cylinder head (3) and having fixing means (82), said well (72) opening out, on the one hand, to the outside of the cylinder head (3) via an insert introduction orifice (78) of large diameter, and, on the other hand, into the combustion chamber (5) via a prechamber tip orifice (77) of smaller diameter, said two diameters being connected to each other by an insert bearing shoulder (79);
• at least one cylindrical insert body (70) consisting of one or more parts and in which in particular the ignition prechamber (71) and the gas ejection duct (76) are arranged, said body (70) being housed with little clearance in the insert well (72), being indexed in rotation relative to the cylinder head (3), and ending with the prechamber tip (75) which passes through the prechamber tip orifice (77), while said body (70) has an insert bearing surface (80) which bears directly or indirectly on the insert bearing shoulder (79),
• at least one insert spark plug well (83) arranged in the cylindrical insert body (70), parallel to the axis of said body (70) or forming a closed angle with respect to said axis and at the centre or close to the centre of said body (70), said spark plug well (83) opening out, on the one hand, at the end of the cylindrical insert body (70) which is axially opposite the prechamber tip (75), and, on the other hand, into the ignition prechamber (71), said spark plug well (83) receiving the ignition spark plug (12) or the injector tip (16);
• at least one radial injector orifice (88) arranged radially in the cylindrical insert body (70) but not necessarily perpendicular to the latter and in which the end of the injector tip (16) or the spark plug 12 is housed, said orifice (88) connecting the ignition prechamber (71) and/or the gas ejection duct (76) with the external surface of the cylindrical insert body (70);
• at least one injector side well (73) provided in the cylinder head (3), said well (73) receiving the body of the injector tip (16) or the spark plug 12 and connecting the outside of the cylinder head (3) with the insert well (72) while the radial injector orifice (88) is aligned with said well (73) so that the end of the injector tip (16) or the spark plug 12 opens into the ignition prechamber (71) and/or the gas ejection duct (76) by successively passing through the injector side well (73) and the radial injector orifice (88);
• clamping means (74) cooperating with the fixing means (82) in order to hold directly or indirectly the insert bearing surface (80) of the cylindrical insert body (70) pressed against the insert bearing shoulder (79);
• **characterised in that** the prechamber tip (75) houses a lamination valve (13) which is pressed either against the end of the gas ejection duct (76) to seal the latter, or against a valve seat (21) on the chamber side to form, with the gas ejection duct (76), a torch ignition prechamber (23) which simultaneously communicates, on the one hand, with the ignition prechamber (71) via the gas ejection duct (76), and, on the other hand, with the combustion chamber (5) via the gas ejection orifice (24);
• and **in that** it further comprises at least one magnetic field source (44) which is positioned on the cylindrical insert body (70), said source producing a magnetic field which tends to keep the lamination valve (13) pressed against the end of the gas ejection duct (76), the latter consisting of a magnetic material (43) and forming at its contact with the lamination valve (13) a gas ejection tube (89) the outer diameter of which is less than that of said valve (13), said tube (89) being enclosed in a non-magnetic sleeve (85) consisting of a non-magnetic material (50).

2. The internal combustion engine (2) according to claim 1, **characterised in that** the prechamber tip (75) consists of an added tip (90) which caps the gas ejection duct (76), the gas ejection orifice (24) being arranged in said added tip (90).

3. The internal combustion engine (2) according to claim 1, **characterised in that** a space forming an insert cooling water chamber (86) is left between the cylindrical insert body (70) and the insert well (72).

4. Internal combustion engine (2) according to claim 1, **characterised in that** the injector side well (73) consists of a perforated or non-continuous bore which communicates over its length with at least one cylinder head cooling water chamber (41) comprised in the cylinder head (3).

5. The internal combustion engine (2) according to claim 1, **characterised in that** the clamping means consist of at least one insert clamping ferrule (74) which has an outer ferrule thread (81) cooperating with the insert well fixing means (72) which consist of an inner well thread (82), said ferrule (74) being pierced in its centre to allow the spark plug (12) to pass through.

6. The internal combustion engine (2) according to claim 5, **characterised in that** the insert clamping ferrule (74) is supported on a ferrule clamping face (84) by means of a compression spring (87).

7. The internal combustion engine (2) according to claim 1, **characterised in that** the insert bearing surface (80) directly or indirectly forms a ball joint with the insert bearing shoulder (79) while the cylindrical insert body (70) directly or indirectly forms a ball joint with the clamping means (74).

8. The internal combustion engine (2) according to claim 7, **characterised in that** the clamping means (74) bear on the cylindrical insert body (70) by means of a sliding-swiveling washer (92) which can move radially either with respect to the cylindrical insert body (70) or with respect to the clamping means (74).

9. The internal combustion engine (2) according to claim 8, **characterised in that** the sliding-swiveling washer (92) is flexible and forms a compression spring (87).

10. The internal combustion engine (2) according to claim 1, **characterised in that** the injector tip (16) is held pressed in the radial injector orifice (88) and against the cylindrical insert body (70) by elastic clamping means (95) which bear, on the one hand, on the injector (8) and, on the other hand, on the cylinder head (3).

11. The internal combustion engine (2) according to claim 10, **characterised in that** the elastic clamping means (95) consist of a flange (96) which bears on the injector (8) on the one hand, and which is connected to the cylinder head (3) by at least one flange screw (97) on the other hand. 1.
